# EUROPÄISCHE PATENTANMELDUNG

(11) **EP 1 801 703 A2**
(43) Veröffentlichungstag der Anmeldung: **27.06.2007**
(21) Anmeldenummer: 06125955.2
(22) Anmeldetag: 12.12.2006
(51) Int. Cl.: G06F 13/40, H04L 12/28

(54) **Verfahren zur Übertragung von Daten über einen Datenbus**

(30) Priorität: 22.12.2005 DE 102005062018
(71) Anmelder: ROBERT BOSCH GMBH, 70442 Stuttgart (DE)
(72) Erfinder: Peuser, Thomas, 71636, Ludwigsburg (DE)

(57) **Zusammenfassung**

Es werden ein Verfahren zur Übertragung von Daten über einen Datenbus, ein entsprechender Datenbus, eine Sendeeinheit, eine Auswerteeinheit, eine elektronische Einheit, ein Computerprogramm und ein Computerprogrammprodukt vorgestellt. Bei dem beschriebenen Verfahren ist vorgesehen, dass zusätzlich zu einem ersten Signal (80) ein zu dem ersten Signal (80) invertiertes, zweites Signal (82) übertragen wird.

## Beschreibung

Die Erfindung betrifft ein Verfahren zur Übertragung von Daten über einen Datenbus, insbesondere einen Datenbus, in dem Daten gemäß dem LIN-Standard übertragen werden, einen entsprechenden Datenbus sowie eine Sende- und Auswerteeinheit zum Einsatz in einem solchen Datenbus, eine elektronische Einheit, ein Computerprogramm und ein Computerprogrammprodukt.

### Stand der Technik

Zur Übertragung von Status- und Steuerinformationen zwischen Komponenten in elektronischen, elektrischen oder elektromechanischen Systemen werden zunehmend Datenbusse eingesetzt. Dabei werden verschiedene Übertragungsverfahren verwendet. Man unterscheidet hierbei zwischen seriellen und parallelen Bussystemen und bei diesen wiederum zwischen verschiedenen angewendeten Protokolle. Bei den seriellen Bussen kann man neben anderen Kriterien eine Einordnung abhängig von der Anzahl der Leitungen und der Polarität der Signale auf den Leitungen durchführen. Eines der Hauptkriterien für die Unterscheidung ist hierbei die Anzahl der Leitungen, die für die Datenübertragung verwendet werden.

Beim Ein-Draht-Bus werden alle notwendigen Informationen über eine einzige Leitung übertragen. Daneben gibt es noch Busse, die bspw. für jede Datenrichtung eine Leitung vorsehen, somit zwei Leitungen, oder weitere Informationen wie Takt oder Massesignale über spezielle Leitungen übertragen.

Bei Ein-Draht-Übertragungen kann ein unterschiedliches Massepotential bei Sender und Empfänger eine korrekte Signalübertragung verhindern. Eine Lösung hierfür bietet die sogenannte asymmetrische Übertragung, bei der ein Massesignal auf einer eigenen Leitung mitgeführt wird. Doch auch diese Übertragung ist gegenüber äußeren Störeinflüssen empfindlich.

Derartige Busse bzw. Netzwerke sind in Kraftfahrzeugen zur Übertragung von Daten weitverbreitet. Bei kostengünstigen Netzwerken mit geringen Anforderungen im Fahrzeugmarkt hat sich als eines der häufig verwendeten standardisierten Bussysteme der LIN-Bus (LIN: Local Interconnect Network) herausgestellt. Der LIN-Standard ist ein serielles Kommunikationsprotokoll, mit dem u. a. das Übertragungsprotokoll und das Übertragungsmedium spezifiziert werden können.

Der LIN-Standard stellt eine kostengünstige Ein-Draht-Implementierung eines Busses in Single-Ended-Technik dar. Single-Ended-Techniken bieten den Vorteil, dass die Übertragungsstrecke zu niedrigeren Preisen als bei Mehr-Draht-Übertragungen ausgeführt werden kann. Man spart Leitungen und zusätzlich einen gewissen Schaltungsaufwand in Sender und Empfänger. Der finanzielle Vorteil ist relativ klein, verursacht aber bei den hohen Stückzahlen, die bei der Fertigung von Personenkraftwagen (Pkw) erreicht werden, einen finanziellen Vorteil für den Fahrzeughersteller. In der Regel nutzt man bei den im Pkw vorliegenden Voraussetzungen Mehr-Draht-Übertragungen, wie bspw. den CAN-Bus, nur in Fällen, in denen die zusätzliche Sicherheit relevante Vorteile bringt. Bei der Anwendung im Generator bei den im Pkw typischen Einsatzbedingungen ist das nicht der Fall.

In Nutzkraftwagen (Nkw) sind die Vorraussetzungen dagegen andere. Die Stückzahlen sind hier deutlich geringer und die räumlichen Gegebenheiten sind für elektronische Kommunikationssysteme schlechter. Durch die größeren Abstände zwischen den Komponenten im Nkw sind teilweise auch höhere Störpegel auf den Leitungen zu erwarten, sowohl bezüglich Ein- als auch Abstrahlungen.

### Vorteile der Erfindung

Bei dem erfindungsgemäßen Verfahren zur Übertragung von Daten über einen Datenbus, insbesondere einem Datenbus, in dem Daten gemäß dem LIN-Standard übertragen werden, ist vorgesehen, dass zusätzlich zu einem ersten Signal ein zu dem ersten Signal invertiertes, zweites Signal übertragen wird.

Somit wird ein erstes Signal und ein zu diesem ersten Signal invertiertes, zweites Signal übertragen, wobei ein Empfänger, typischerweise ein Endgerät in einem Kraftfahrzeug, die beiden Signale empfängt und durch Bilden einer Differenz der beiden Signale ein Nutzsignal bzw. eine Nutzinformation erhält. Dieses Nutzsignal korrespondiert mit dem ausgesendeten ersten Signal. Störeinflüsse, die die beiden Signale bei der Übertragung ggf. beeinflusst haben, sind eliminiert.

Der erfindungsgemäße Datenbus dient insbesondere zur Durchführung des beschriebenen Verfahrens. Dieser Datenbus überträgt Daten gemäß dem LIN-Standard und wird im folgenden als LIN-Bus bezeichnet. Bei diesem ist zusätzlich zu einer ersten Signalleitung für ein erstes Signal eine zweite Signalleitung für ein zweites, zu dem ersten Signal invertiertes Signal vorgesehen.

Diese beiden Signalleitungen sind in Ausgestaltung miteinander verdrillt und können den gleichen Querschnitt aufweisen.

Die erfindungsgemäße Sendeeinheit ist für einen Einsatz in einem Datenbus vorgesehen und weist eine Einrichtung zum Erzeugen eines zu einem vorliegenden ersten Signal invertierten, zweiten Signals auf. Die Sendeeinheit ist typischerweise einem Endgerät in einem Kraftfahrzeug zugeordnet bzw. in diesem Endgerät vorgesehen.

Die erfindungsgemäße Auswerteeinheit, die ebenfalls für den Einsatz in einem Datenbus vorgesehen ist, weist eine Einrichtung zum Bilden einer Differenz zwischen einem ersten Signal und einem zweiten Signal auf. Auch diese ist typischerweise einem Endgerät eines Kraftfahrzeugs zugeordnet bzw. in diesem vorgesehen.

Die erfindungsgemäße elektronische Einheit umfasst eine solche Sendeeinheit und eine solche Auswerteeinheit und kommt typischerweise in einem LIN-Bus bzw. LIN-Netzwerk zur Anwendung.

Das erfindungsgemäße Computerprogramm umfasst ein Programm, um das erfindungsgemäße Verfahren durchzuführen, wenn es auf einem Computer oder einer entsprechenden Recheneinheit durchgeführt wird.

Das erfindungsgemäße Computerprogrammprodukt umfasst einen Programmcode zur Durchführung des Verfahrens, der auf einem computerlesbaren Datenträger gespeichert ist.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.
- Figur 1: zeigt das Prinzip der Single-Ended-Übertragung.
- Figur 2: zeigt eine Single-Ended-Übertragung mit Offset.
- Figur 3: zeigt das Prinzip der asymmetrischen Übertragung.
- Figur 4: zeigt eine asymmetrische Übertragung mit Störung.
- Figur 5: zeigt eine differentielle Übertragung.
- Figur 6: zeigt in einer schematischen Darstellung die Vorgehensweise bei dem erfindungsgemäßen Verfahren.

Zur Verdeutlichung der Erfindung werden zunächst unterschiedliche Übertragungsarten vorgestellt.

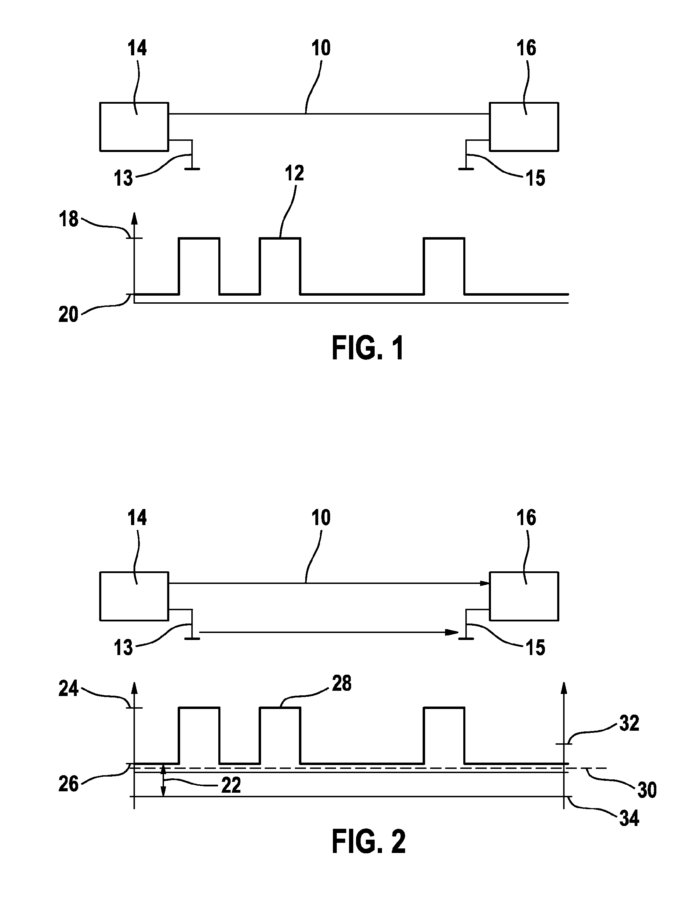

In Figur 1 ist die Single-Ended-Übertragung verdeutlicht. Bei dieser wird auf einer Signalleitung 10 ein Signal 12 mit einer einzigen Polarität übertragen. Der Signalpegel ist auf die jeweilige Masse 13 bzw. 15 von Sender bzw. Datenquelle 14 und Empfänger bzw. Datensenke 16 bezogen. Der Sender 14 und der Empfänger 16 sind Geräte, bspw. Endgeräte in einem Kraftfahrzeug, die miteinander kommunizieren. Die verschiedenen Signalpegel sind mit Hi 18 und Low 20 bezeichnet. Bei idealen Übertragungsbedingungen ist diese Form absolut ausreichend, um Daten zuverlässig und schnell zu übertragen.

Ein unterschiedliches Massepotential bei dem Sender 14 und dem Empfänger 16 wird aber ab einer bestimmten Höhe ausreichen, um eine korrekte Signalübertragung zu verhindern. Dies wird in Figur 2 verdeutlicht, in der eine Single-Ended-Übertragung mit einer Versetzung bzw. einem Offset gezeigt ist.

Der Sender 14 und der Empfänger 16 haben ein unterschiedliches Massepotential mit einem Spannungsunterschied von ΔU (Pfeil 22) zwischen den Massen 13 und 15. Daher sendet der Sender 14 mit den Pegeln Hi1 24 und Low1 26. Der Empfänger 16 sieht dieses Signal 28 um den Spannungsoffset verschoben. Eine Erkennungsschwelle 30 des Empfängers 16 ist hier mit ca. der Mitte zwischen Hi2 32 und Low2 34 angenommen. Da es sich hier aber um eine Prinzipdarstellung handelt, haben die Pegel keine Relevanz.

Dieser Zustand ist prinzipiell noch nicht problematisch, da er theoretisch eine Erkennung nicht behindert und höchstens bei der Implementierung Probleme bereitet. Deutlich problematischer ist, dass der Pegel Low1 26 über der Erkennungsschwelle 30 liegt. Damit wird der Empfänger 16 hier nie einen Low-Pegel erkennen. Eine Übertragung von Informationen mit einer Single-Ended-Übertragung ist also beim eventuellen Vorliegen von Spannungsdifferenzen zwischen den Gerätemassen nicht zuverlässig möglich.

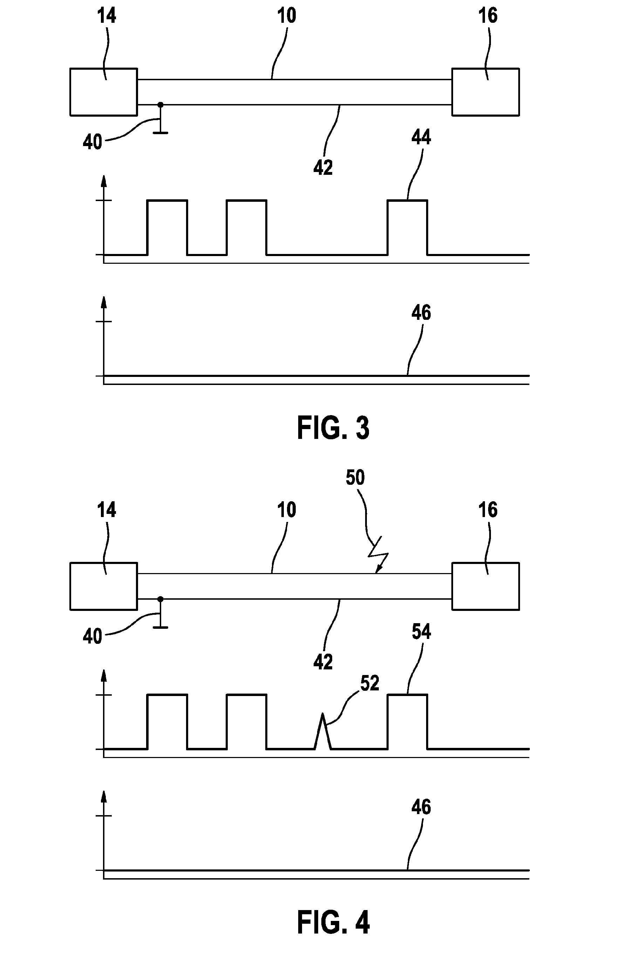

Eine Lösung für dieses Problem bietet die sogenannte asymmetrische Übertragung. In Figur 3 ist diese Übertragung wiedergegeben. Dabei wird ein Massesignal 46 einer Masse 40 auf einer eigenen Masseleitung 42 mitgeführt. Dieses ist idealerweise ein Gleichspannungssignal. Dabei stören unterschiedliche Bezugsmassen der Geräte theoretisch nicht die Übertragung, da der Pegel des Signals 10 auf die mitgeführte Signalmasse bezogen wird. Durch das Beziehen des Signals 44 sowohl bei Sender 14 als auch bei Empfänger 16 auf den gleichen Massepegel, repräsentiert durch das Massesignal 46, kann hier eine Spannungsdifferenz zwischen den beiden Geräten 14 und 16 die Erkennbarkeit der Informationen nicht beeinflussen. Die Implementierung der Masseleitung 42 erfolgt typisch mit "Signal 2" als Schirmung der Signalleitung 10 "Signal 1".

Trotz der verbesserten Überstragungssicherheit gegenüber der Single-Ended-Übertragung gibt es auch hier Faktoren, die die Erkennung der Daten beeinflussen. Einer dieser Faktoren sind Störungen durch externe Signale. Diese Störung werden auf die Leitungen 10 und 42 übertragen. Durch den schon beschriebenen asymmetrischen Aufbau des Übertragungssystems, also z.B. unterschiedliche Innenwiderstände, Ansteuerungen oder Querschnitte der Leitungen 10 und 42, tritt die Störung normalerweise dominierend auf einer der beiden Leitungen 10 bzw. 42 auf.

In Figur 4 sind die Auswirkungen einer Störung auf eine asymmetrische Übertragung veranschaulicht. Eine Störung (Pfeil 50) verursacht einen Störimpuls 52 auf die Signalleitung 10. Die Masseleitung 42 bleibt in diesem Beispiel durch die Asymmetrie unbeeinträchtigt. Wenn der durch die Störung bewirkte Störimpuls 52 in dem Signal 54 nun die Erkennungsschwelle überschreitet, wird unter Umständen an dieser Stelle das Signal 54 fälschlich als Hi interpretiert. Die asymmetrische Übertragung ist also unempfindlich gegenüber Potentialdifferenzen zwischen den Geräten. Störungen, die auf den Übertragungsweg einwirken, können die Übertragung aber nach wie vor unbrauchbar machen.

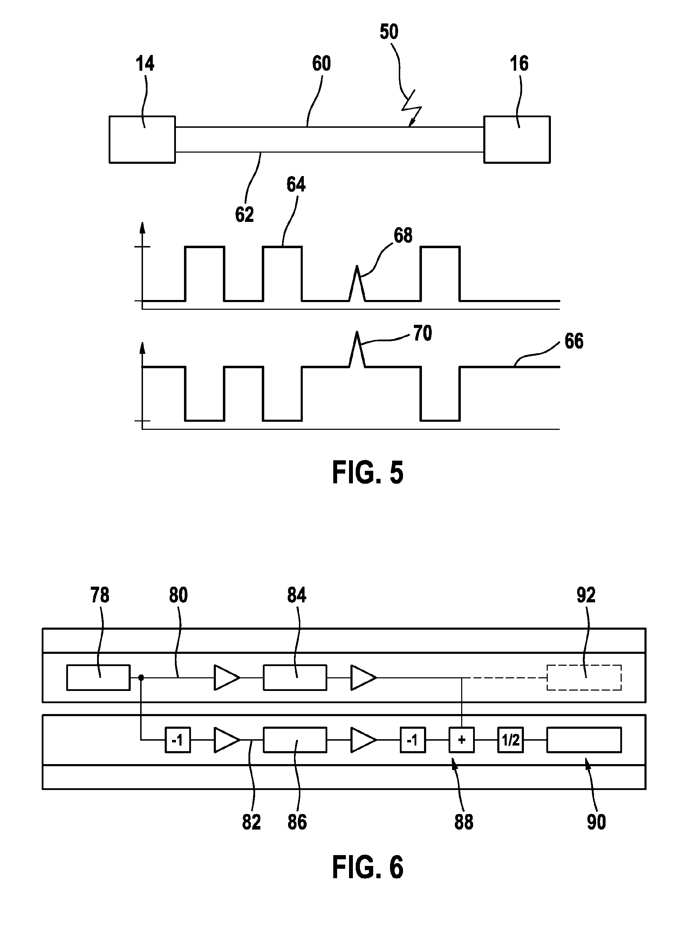

Bei der sogenannten differentiellen Übertragung, die in Figur 5 dargestellt ist, wird dagegen auf die Übertragung der Masse verzichtet. Es werden statt dessen zwei Leitungen 60 und 62 für ein Signal 64 verwendet. Dabei führt eine Leitung 60 das Signal 64 mit einem bestimmten Pegel, die andere Leitung 62 überträgt ein dazu inverses bzw. invertiertes, an einem bestimmten Spannungspegel gespiegelte Signal 66. Zur Ermittlung wird dann die Differenz zwischen beiden Signalen 64 und 66 bzw. Leitungen 60 und 62 gebildet. Man erhält dadurch das Ursprungssignal mit doppeltem Pegel.

Durch eine geeignete Implementierung (gleiche Treibereigenschaften, verdrillte Leitungen mit gleichem Querschnitt aller Leiter usw.) der Übertragungsstrecke erhält man die Eigenschaft, dass beide Signale 64 und 66 die gleichen Bedingungen auf der Übertragungsstrecke vorfinden. Daher werden auch externe Störungen (Pfeil 50) bei beiden Signalen die gleiche Störung 68 bzw. 70 erzeugen. Bei der Differenzbildung zwischen den Signalen 64 und 66 in dem Empfänger 16 werden die Störimpulse 68 und 70 somit praktisch vollständig eliminiert. Diese Form der Übertragung ist damit prinzipiell unempfindlich gegenüber Spannungsdifferenzen zwischen den beteiligten Geräten und gegenüber elektromagnetischen Störungen von außen.

Grundsätzlich gelten die beschriebenen Eigenschaften auch für Abstrahlungen (EMV-Emissionen). Durch den symmetrischen Aufbau der Übertragungsstrecke (verdrillte Leitungen, invertierte Signale und damit auch invertierte Flanken) sind die von den beiden am Aufbau einer logischen Signalleitung beteiligten elektrischen Leitungen abgegebenen elektromagnetischen Felder zueinander invers. Nach den geltenden physikalischen Gesetzen des Elektromagnetismus löschen sich die Felder gegenseitig nahezu vollständig aus. Daher sind symmetrische Übertragungen, was das EMV-Verhalten angeht, also sowohl hinsichtlich Einstrahlungen als auch Abstrahlungen, deutlich vorteilhafter als Single-Ended-Übertragungen.

Die Erweiterung des LIN-Busses um das differentielle Übertragungsverfahren ist somit insbesondere im N KW sinnvoll, wobei die grundlegende Architektur des PKW zu übernehmen ist. Hierbei wird also die LIN-Schnittstelle verwendet, diese aber um die differentielle Übertragung erweitert und damit die Störsicherheit verbessert. Damit verbindet man die Vorteile der standardisierten LIN-Steuergeräte, wie bspw. Software, Entwicklungswerkzeuge und Diagnosesysteme, mit der erweiterten Störfestigkeit differentieller Übertragungen.

Die Kompatibilität zu dem jeweils bestehenden Verfahren ist dadurch gegeben, dass die invertierte Leitung am Sender 14 oder Empfänger 16 bzw. an beiden auf ein Bezugspotential, typischerweise die Masse, gelegt wird. Damit erreicht man die gleiche Struktur wie bei der asymmetrischen Übertragung bzw. bei der Single-Ended-Übertragung. Auf diese Weise kann eine Kommunikation auch stattfinden, wenn eines der beiden Geräte nicht für die differentielle Übertragung geeignet ist. Wenn also z. B. der Generator mit einem differentiellen Anschluss für ein Bussystem (z. B. LI N) ausgestattet ist, bleibt es dem Systemhersteller (Fahrzeughersteller) überlassen, ob er die zusätzliche Sicherheit durch die differentielle Übertragung nutzt oder aber darauf verzichtet. Man kann dann mit einem Typ Endgeräte, also z.B. einem Typ Generatoren, beide Anwendungsgebiete abdecken. Die Mehrkosten belaufen sich dabei im wesentlichen auf den Zusatzaufwand für einen Pin im Steckergehäuse.

In Figur 6 ist das erfindungsgemäße Verfahren verdeutlicht. Bei diesem wird zusätzlich zum Standard-Verfahren zu einem in eine Dateneingabe 78 eingegebenen Signal 80 in einem Daten-Sender oder einem mit diesem sehr eng verbundenen System (z.B. invertierender Treiber innerhalb des Steuergerätes, zweiter Pfad im Spannungsregler am Generator usw.) ein invertiertes Signal 82 erzeugt. Dieses wird, zusätzlich zum Standard-Verfahren mit einer ersten Leitung 84, über eine zweite Leitung 86 zu einem Daten-Empfänger gesendet. Die beiden Leitungen 84 und 86 mit natürlichem 80 und invertiertem Signal 82 können dabei zur Steigerung der Wirksamkeit verdrillt sein. Im Empfänger wird dann die Differenz zwischen den beiden Signalen ermittelt (Operationen 88). Aus den beiden Leitungen 84 und 86 wird folglich an einem Signalausgang 90 die Nutzinformation zurückgewonnen. An einem Signalausgang 92 des Single-Ended-Pfads liegt eine ggf. gestörte Information an.

Die einzelnen Datenstationen am Bus können ihren Status, also Sender oder Empfänger, während des Betriebs den Erfordernissen entsprechend anpassen. Zur Erklärung ein Beispiel: Station 1 (Anfragender) ist Sender, Station 2 (Angefragter) ist Empfänger. Zur Beantwortung der Anfrage kehren sich dann die Verhältnisse um. Station 2 (antwortet) ist Sender, Station 1 (nimmt die Antwort entgegen) ist Empfänger.

## Patentansprüche

1. Verfahren zur Übertragung von Daten über einen Datenbus, in dem gemäß dem LIN-Standard Daten übertragen werden, bei dem zusätzlich zu einem ersten Signal (64, 80) ein zu dem ersten Signal (64, 80) invertiertes, zweites Signal (66, 82) übertragen wird.

2. Verfahren nach Anspruch 1, bei dem das erste Signal (64, 80) und das zweite Signal (66, 82) empfangen werden und durch Bilden einer Differenz der beiden Signale (64, 66, 80, 82) eine Nutzinformation (90) erhalten wird.

3. Verfahren nach Anspruch 1 oder 2, bei dem eine Kommunikation zwischen Endgeräten in einem Kraftfahrzeug realisiert wird.

4. Verfahren nach einem der Ansprüche 1 bis 3, das zur Eliminierung von Störgrößen (50) eingesetzt wird.

5. Datenbus, insbesondere zur Durchführung eines Verfahrens nach einem der Ansprüche 1 bis 4, in dem Daten gemäß dem LIN-Standard übertragen werden und bei dem zusätzlich zu einer ersten Signalleitung (60) für ein erstes Signal (64, 80) eine zweite Signalleitung (62) für ein zu dem ersten Signal (64, 80) invertiertes, zweites Signal (66, 82) vorgesehen ist.

6. Datenbus nach Anspruch 5, bei dem die erste Signalleitung (60) und die zweite Signalleitung (62) miteinander verdrillt sind.

7. Datenbus nach Anspruch 5 oder 6, bei dem die beiden Signalleitungen (60, 62) den gleichen Querschnitt aufweisen.

8. Sendeeinheit zum Einsatz in einem Datenbus, insbesondere einem Datenbus nach einem der Ansprüche 5 bis 7, mit einer Einrichtung zum Erzeugen eines zu einem vorliegenden ersten Signal (64, 80) invertierten, zweiten Signals (66, 82).

9. Sendeeinheit nach Anspruch 8, die in einem Endgerät eines Kraftfahrzeugs vorgesehen ist.

10. Auswerteeinheit zum Einsatz in einem Datenbus, insbesondere einem Datenbus nach einem der Ansprüche 5 bis 7, mit einer Einrichtung zum Bilden einer Differenz zwischen einem ersten Signal (64, 80) und einem zweiten Signal (66, 82).

11. Auswerteeinheit nach Anspruch 10, die in einem Endgerät eines Kraftfahrzeugs vorgesehen ist.

12. Elektronische Einheit zum Einsatz in einem Datenbus, insbesondere einem Datenbus nach einem der Ansprüche 5 bis 7, mit einer Sendeeinheit gemäß Anspruch 8 oder 9 und einer Auswerteeinheit gemäß Anspruch 10 oder 11.

13. Computerprogramm mit Programmcode, um alle Schritte eines Verfahrens nach einem der Ansprüche 1 bis 4 durchzuführen, wenn das Computerprogramm auf einem Computer oder einer entsprechenden Recheneinheit durchgeführt wird.

14. Computerprogrammprodukt mit Programmcode, der auf einem computerlesbaren Datenträger gespeichert ist, um ein Verfahren nach einem der Ansprüche 1 bis 4 durchzuführen, wenn das Computerprogramm auf einem Computer oder einer entsprechenden Recheneinheit durchgeführt wird.
